Europäisches Patentamt

European Patent Office

Office européen des brevets

(19)

(11) Veröffentlichungsnummer: **0 184 194**
**B1**

(12) **EUROPÄISCHE PATENTSCHRIFT**

(45) Veröffentlichungstag der Patentschrift:
09.08.89

(21) Anmeldenummer: 85115342.9

(22) Anmeldetag: 03.12.85

(51) Int. Cl.⁴: **G 01 N 27/56**

(54) **Festelektrolyt-Tauchsonde.**

(30) Priorität: 06.12.84 DE 3444474

(43) Veröffentlichungstag der Anmeldung:
11.06.86 Patentblatt 86/24

(45) Bekanntmachung des Hinweises auf die Patenterteilung: 09.08.89 Patentblatt 89/32

(84) Benannte Vertragsstaaten:
BE IT SE

(56) Entgegenhaltungen:
DE–A– 2 819 381
DE–A– 2 900 047
DE–A– 3 001 890
DE–A– 3 303 851
DE–B– 1 648 923
FR–A– 2 502 784
GB–A– 1 501 708
STAHL & EISEN, JAHRGANG 98, Heft 16, August 1978, Seiten 825-829; D. JANKE et al.: "Eine neue Tauchsonde zur elektrochemischen Schnellbestimmung des gelösten Sauerstoffs in Metallschmelzen"

(73) Patentinhaber: Ferrotron Elektronik GmbH
Siemensstrasse 9-11
D-4030 Ratingen (DE)

Fischer, Wilhelm Anton Prof.Dr.
Mülheimer Strasse 67
D-4030 Ratingen (DE)

(72) Erfinder: Mach, Johannes, Dr.
Am Jungborn Park 218
D-4130 Moers 3 (DE)
Erfinder: Fischer, Wilhelm Anton, Prof. Dr.
Mülheimer Strasse 67
D-4030 Ratingen (DE)

(74) Vertreter: Patentanwälte Dipl.-Ing. Walter Kuborn
Dipl.-Phys. Dr. Peter Palgen
Mulvanystrasse 2
D-4000 Düsseldorf (DE)

## Beschreibung

Die Erfindung bezieht sich auf eine Festelektrolyt-Tauchsonde der dem Oberbegriff des Anspruchs 1 entsprechenden Art.

Festelektrolyt-Tauchsonden sind in vielen Ausführungsformen bekannt, beispielsweise aus der DE-B-29 00 047, der DE-A-29 34 244 und der US-A-3 668 099. Ein Gemisch aus Cr und $Cr_2O_3$ als Vergleichssubstanz ist schon in der DE-B 16 48 923 beschrieben.

Die unmittelbare Bestimmung der Sauerstoffaktivität von Stahlschmelzen mit derartigen Sonden hat weltweit in der metallurgischen Praxis eine vielseitige Anwendung gefunden, zum Beispiel bei Blasstahlverfahren zur Festlegung des Endkohlenstoffgehalts zur Steuerung des Kochvorgangs bei der Herstellung halbberuhigter Stahlgüten, zur Kontrolle des Desoxidationsvorgangs bei den vollberuhigten Stahlqualitäten sowie zur Prozeßkontrolle beim Stranggießen.

Das Meßverfahren ist in der Schriftstelle « Stahl und Eisen » 94 (1974) Nr. 12, S. 547 bis 550 erläutert. Es ergeben sich charakteristische EMK-Kurven, die einen steilen Anstieg mit anschließendem Abfall und Erreichen eines Plateaus beinhalten. Der EMK-Wert des Plateaus bildet den Meßwert.

Bis sich das Plateau einstellt, vergeht eine gewisse sogenannte Einstellzeit in der Größenordnung von 10 bis 20 Sekunden. Während dieser Zeit befindet sich die Sonde in der sehr heißen (über 1 600°C) und dementsprechend sehr aggressiven Schmelze und ist einer erheblichen Beanspruchung ausgesetzt. Um die Zuverlässigkeit der Sonden zu gewährleisten und auch um den Meßvorgang schnell abschließen zu können, wird danach getrachtet, die Tauchzeiten der Sonden möglichst kurz zu halten.

Eine auf rein chemischem Wege gehende Lösung dieses Problems wird in der dem Oberbegriff des Anspruchs 1 zugrundeliegenden GB-A-15 01 708 angegeben. Gemäß dieser Schrift soll dem Feststoffelektrolyt-Gemisch ein Metalloxid zugesetzt werden, dessen Metall eine geringere Affinität zu Sauerstoff hat als das dem Feststoffelektrolyt-Gemisch angehörende Metall, also z. B. $Fe_2O_3$ zu $Cr/Cr_2O_3$. Ziel ist hierbei die Herbeiführung einer begrenzten exothermen Reaktion zwischen den Bestandteilen beim Eintauchen der Sonde in die Schmelze, so daß von innen, d. h. aus dem Material des Feststoffelektrolyten, ein Beitrag zur raschen Erreichung des Temperaturgleichgewichts zwischen Feststoffelektrolyt und Schmelze geleistet wird und die Temperatursteigerung des Feststoffelektrolyten nicht nur von der Wärmeleitung geleistet werden muß.

Der Erfindung liegt die Aufgabe zugrunde, die Einstellzeit einer Festelektrolyt-Tauchsonde der dem Oberbegriff des Anspruchs 1 entsprechenden Art noch weiter zu verkürzen.

Dies gelingt in überraschender Weise durch die in Anspruch 1 wiedergegebene Erfindung.

Die Ausbildung des Feststoffelektrolyten als an einem Ende halbkugelig geschlossenes Röhrchen entspricht einer verbreiteten Ausführung, die für sich eine Reihe von Vorteilen aufweist wie Einfachheit der Herstellung, Abwesenheit von Abdichtungsproblemen zwischen Feststoffelektrolyt und sonst vorhandenem separatem Träger u. dgl. Das halbkugelig geschlossene Röhrchen erhält jedoch im vorliegenden Fall im Zusammenhang mit weiteren Merkmalen der Erfindung noch eine besondere Bedeutung. Bei den Versuchen ergab sich nämlich, daß eine Ausbildung der Ableitelektrode mit einer Spitze im Hinblick auf die Gleichmäßigkeit der Messungen nicht günstig ist, weil die Spitze immer einmal auf eine Ungleichmäßigkeit in der Wandung des Festelektrolyten treffen kann Merkwürdigerweise stellte sich auch heraus, daß die Spitze sogar im Hinblick auf die Einstellgeschwindigkeit nicht die günstigste Ausführungsform ist, sondern daß die Einstellgeschwindigkeit bei einer kugeligen Ausbildung gemäß Merkmal b) gesteigert wird, bei der sich das teilkugelige Ende der Ableitelektrode der Innenseite des halbkugeligen Endes des Feststoffelektrolyt-Röhrchens anschmiegt.

Es wurde ferner gefunden, daß im Hinblick auf die Verkürzung der Einstellzeit noch eine Verbesserung erzielt werden kann, wenn das vorgesinterte Gut auf eine Korngröße im Bereich von 100 bis 200 μm vermahlen wird. Die Technik ist für sich genommen aus der DE-A-32 10 663 bekannt. Auf diese Weise werden Schwindungsprobleme vermieden und ergibt sich eine besonders homogene Vergleichssubstanz. Das zugesetzte $Fe_2O_3$ übt hierbei außer der Verkürzung der Einstellzeit noch die vorteilhafte Wirkung eines Sinterhilfsmittels aus, so daß die gewünschte Wirkung schon nach einem Sintern in einem deutlich niedrigeren Temperaturbereich erreicht wird, als er in der DE-A-32 10 663 « nicht unter 1 550 °C » angegeben ist.

Die Ausführung nach Anspruch 2 erleichtert die Handhabung beim Füllen des Röhrchens und das Andrücken des Kügelchens gegen die Innenwandung des Festelektrolyt-Röhrchens, während Anspruch 3 eine in Versuchen als zweckmäßig festgestellte Bemessung des Durchmessers des Kügelchens zum Inhalt hat.

Die Ansprüche 4 und 5 geben einen bevorzugten Bereich bzw. Wert für den $Fe_2O_3$-Gehalt der die Vergleichssubstanz bildenden Gesamtmischung an. Die Werte sind stets auf den gebrauchsfertigen Zustand der Sonde vor dem Einsatz bezogen.

Anspruch 6 gibt einen in Betracht kommenden Bereich der Gesamtzusammensetzung an.

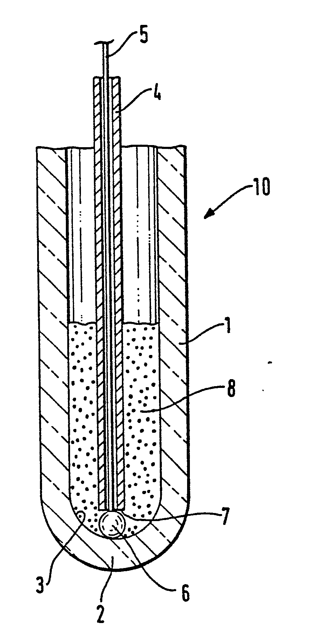

In der Zeichnung ist die erfindungsgemäße Sonde schematisch dargestellt. Sie zeigt einen Teillängsschnitt durch das untere Ende der Sonde.

Die als Ganzes mit 10 bezeichnete Festelektrolyt-Tauchsonde umfaßt ein durch den Festelektrolyten gebildetes Röhrchen 1, welches am unteren Ende 2 geschlossen ist, wobei die innere Endfläche 3 eine im wesentlichen kugelige Gestalt aufweist. Das Material des Festelektrolyt-Röhrchens 1 ist kalkstabilisiertes Zirkonoxid ($ZrO_2$).

In dem Festelektrolyt-Röhrchen 1 verläuft etwa koaxial zu diesem ein Kapillar-Röhrchen 4 aus einem Feuerfestmaterial, zum Beispiel $Al_2O_3$. Durch das Kapillar-Röhrchen 4 ist ein dünner Platindraht von etwa 0,1 mm als Ableitelektrode hindurchgeführt, der an seinem unteren Ende ein angeschmolzenes Kügelchen 6 von etwa 0,5 mm Durchmesser aufweist. Dieser Durchmesser ist größer als der Innendurchmesser des Kapillar-Röhrchens 4, so daß das Kügelchen 6 mit seiner Rückseite, d. h. der der Ableitelektrode 5 zugewandten Seite, an dem dortigen Rand 7 des Kapillar-Röhrchens 4 in der aus der Zeichnung ersichtlichen Weise anliegt.

Das Kapillar-Röhrchen 4 dient dazu, das feine Platindrähtchen 5 mit dem Kügelchen 6 bei der Herstellung der Sonde 10 handhaben, den Draht 5 und das Kügelchen in der Mitte des Festelektrolyt-Röhrchens 1 halten und insbesondere das Kügelchen 6 gut gegen die Wandungsfläche 3 des Endes 2 des Festelektrolyt-Röhrchens 1 andrükken zu können.

Nachdem das Kapillar-Röhrchen 4 in das Festelektrolyt-Röhrchen 1 eingeführt ist, wird die pulverförmig gemahlene Vergleichssubstanz 8 eingefüllt und festgestossen. Die Sonde 10 wird sodann in einem geeigneten Träger befestigt und mit Anschlüssen versehen, worauf sie betriebsbereit ist.

In dem dargestellten Ausführungsbeispiel wird die gleichzeitig mit der EMK-Messung vorzunehmende Temperaturmessung durch ein separates Thermoelement ausgeführt. Es ist aber auch möglich, einen der Schenkel des Thermoelements selbst als Ableitelektrode zu verwenden. Das Thermoelement würde dann in die Sonde 10 integriert. Es wäre dann das Drähtchen 5 einer der Schenkel des Thermoelements.

Zur Herstellung der Vergleichssubstanz 8 wurde eine Mischung aus 84 Gew.-% Cr der Körnung ≈ 40 μm, 10 Gew.-% $Cr_2O_3$ und 6 Gew.-% $Fe_2O_3$, beide pulverfein, in einem verschweißten Eisenrohr zwei Stunden bei 1 420 °C geglüht, anschließend in Wasser abgeschreckt und der Sinter auf eine Kornfeinheit von 100 bis 200 μm vermahlen. Von diesem Mahlgut wurden 0,2 g in das Festelektrolyt-Röhrchen eingefüllt.

Wird die Sonde 10 in eine Schmelze eingeführt, bildet sich zwischenzeitlich bei 1372 °C flüssiges FeO und oberhalb 1 537 °C flüssiges Eisen. Offenbar begünstigen diese flüssigen Phasenanteile den Sauerstofftransport an die Phasengrenze Festelektrolyt/Vergleichssubstanz.

Zur Klärung der Wirkung des $Fe_2O_3$-Zusatzes zu der Vergleichssubstanz 8 wurden Vergleichsversuche durchgeführt. Hierzu wurden Mischungen aus 88 Gew.-% Cr, 6 Gew.-% $Cr_2O_3$ und jeweils 6 Gew.-% $MnO_2$ bzw. $Mn_2O_3$ bzw. $Fe_2O_3$ verwendet. Es zeigte sich, daß bei den Manganoxid-Zusätzen Verläufe der EMK-Kurven erhalten wurden, die denen der üblichen $Cr/Cr_2O_3$-Pulvermischung entsprechen.

Im Gegensatz dazu führte der $Fe_2O_3$-Zusatz zu einer merklichen Verkürzung der Einstellzeit für das EMK-Plateau und zu einer Verminderung des Abdriftens des erreichten EMK-Plateauwertes innerhalb der Versuchszeit von etwa 30 Sekunden.

Ferner wurden außer dem Kornfeinheitsbereich 100 bis 200 μm noch die Kornklassen 60 bis 100 μm und 200 bis 300 μm geprüft. Die Einstellzeiten waren im Korngrößenbereich 100 bis 200 μm kürzer als bei den beiden anderen Bereichen.

Schließlich wurde noch der Einfluß der Form der Ableitelektrode untersucht. Die in der Zeichnung wiedergegebene Ableitelektrode mit einem Kügelchen 6 von 0,5 mm Durchmesser wurde mit einem angespitzten, 0,75 mm starken Mo-Draht und mit einem 0,3 mm starken Mo-Draht verglichen, der in Form einer Schlaufe in die Vergleichssubstanz eingeführt war.

Bei dem Kügelchen 6 waren im untersuchten Aktivitätsbereich der Stahlschmelze von $2 \times 10^{-4}$ bis $18 \times 10^{-4}$ die Einstellzeiten um 2 bis 5 Sekunden kürzer als die Einstellzeiten bei den beiden anderen Ausführungsformen.

Leicht zu erklären ist dieser Effekt nicht. Es mag sein, daß durch die durch die Kugelform vergrößerte Oberfläche, die sich der Form der Phasengrenzfläche, die an der inneren Wandung 3 des Festelektrolyt-Röhrchens 1 gegeben ist, besser anschmiegt, im Bereich der Phasengrenzfläche eine größere Übergangsfläche zur Verfügung steht, die für die Einstellzeit eine Bedeutung hat. Auch dürften gewisse Fehler durch die flächige Ausbildung des Endes der Ableitelektrode ausgemittelt werden.

Die Radien des Kügelchens 6 und der Wandung 3 müssen nicht übereinstimmen; im allgemeinen wird das Kügelchen 6 sogar einen wesentlich kleineren Radius aufweisen. Theoretisch ist dann ebenso wie bei einer Spitze eine punktförmige Anlage gegeben. Praktisch aber hat die kugelförmige Ausbildung eben doch die genannten Vorteile.

## Patentansprüche

1. Festelektrolyt-Tauchsonde zur Bestimmung der Sauerstoffaktivität von Metall-, insbesondere von Stahlschmelzen, mit einer aus einem Gemisch aus Cr und $Cr_2O_3$ mit einem Zusatz an $Fe_2O_3$ bestehenden Vergleichssubstanz bestimmter Sauerstoffaktivität, die durch eine Ableitelektrode an ein Potentialmeßgerät anschließbar und durch einen bei höheren Temperaturen überwiegend sauerstoffionenleitenden und vernachlässigbar elektronenleitenden Festelektrolyten von der Schmelze getrennt ist, gekennzeichnet durch folgende Merkmale:

a) der Festelektrolyt ist als die Vergleichssubstanz aufnehmendes, an einem Ende halbkugelig geschlossenes Röhrchen ausgebildet,

b) die Ableitelektrode (5) ist an dem in das Röhrchen (1) vorstehenden Ende teilkugelig mit einem der inneren Endfläche (3) des Röhrchens (1) höchstens gleichen Radius ausgebildet und liegt an der inneren Endfläche (3) des Röhrchens (1) an,

c) das Gemisch der Vergleichssubstanz ist bei 1390 bis 1 450 °C unter Luftabschluß gesintert und auf eine Korngröße im Bereich 100 bis 200 µm vermahlen.

2. Festelektrolyt-Tauchsonde nach Anspruch 1, dadurch gekennzeichnet, daß die Ableitelektrode (5) durch einen in einem feuerfesten Kapillar-Röhrchen (4) geführten Draht (5) gebildet ist, der am Ende ein angeschmolzenes Kügelchen (6) aufweist, welches auf der dem Draht (5) zugewandten Seite gegen den Rand (7) des Kapillar-Röhrchens (4) anliegt.

3. Festelektrolyt-Tauchsonde nach Anspruch 2, dadurch gekennzeichnet, daß der Durchmesser des Kügelchens (6) 0,3 bis 0,6 mm beträgt.

4. Festelektrolyt-Tauchsonde nach einem der Ansprüche 1 bis 3, dadurch gekennzeichnet, daß die Vergleichssubstanz (8) 4 bis 10 Gew.-% $Fe_2O_3$ enthält.

5. Festelektrolyt-Tauchsonde nach Anspruch 4, dadurch gekennzeichnet, daß die Vergleichssubstanz (8) etwa 6 Gew.-% $Fe_2O_3$ enthält.

6. Festelektrolyt-Tauchsonde nach einem der Ansprüche 1 bis 5, dadurch gekennzeichnet, daß die Vergleichssubstanz (8) 80 bis 92 Gew.-% Cr sowie 12 bis 5 Gew.-% $Cr_2O_3$, Rest $Fe_2O_3$ enthält.

## Claims

1. Solid electrolyte immersion probe for determining the oxygen activity of metal melts, in particular steel melts, with a comparison material of predetermined oxygen activity which comprises a mixture of Cr and $Cr_2O_3$ with an addition of $Fe_2O_3$ and which can be connected through a pick-up electrode to a potential measuring apparatus and is kept apart from the melt by a solid electrolyte which at high temperatures is largely permeable to oxygen ions and of negligible permeability to electrons, characterised by the following features :

a) the solid electrolyte is in the form of a tube closed hemispherically at one end and receiving the comparison material,

b) the pick-up electrode (5) is part-spherical at that end which projects into the tube (1) with a radius which is at most equal to that of the inner end surface (3) of the tube (1) and engages against the inside end surface (3) of the tube (1),

c) the mixture comprising the comparison material is sintered at 1 390 to 1 450 °C in the absence of air and ground to a grain size in the region 100 to 200 µm.

2. Solid electrolyte immersion probe according to claim 1 characterised in that the pick-up electrode (5) is formed by a wire (5) which is guided in a refractory capillary tube (4) and which has welded on to its end a small ball (6) which, at that face that is towards the wire (5), engages against the rim (7) of the capillary tube (4).

3. Solid electrolyte immersion probe according to claim 2 characterised in that the diameter of the small ball (6) amount to 0.3 to 0.6 mm.

4. Solid electrolyte immersion probe according to one of claims 1 to 3 characterised in that the comparison material (8) contains 4 to 10 % by weight of $Fe_2O_3$.

5. Solid electrolyte immersion probe according to claim 4 characterised in that the comparison material (8) contains about 6 % by weight of $Fe_2O_3$.

6. Solid electrolyte immersion probe according to one of claims 1 to 5 characterised in that the comparison material (8) contains 80 to 92 % by weight of Cr and 12 to 5 % by weight of $Cr_2O_3$, the balance being $Fe_2O_3$.

## Revendications

1. Sonde à immersion en électrolyte solide pour déterminer l'activité en oxygène d'un bain métallique notamment d'un bain d'acier comportant une matière de comparaison formée d'un mélange de Cr et de $Cr_2O_3$ avec addition de $Fe_2O_3$ pour déterminer l'activité de l'oxygène, qui est reliée par une électrode de sortie à un appareil de mesure de potentiel et est séparée du bain par un électrolyte solide qui, aux températures élevées, est à prédominance conducteur par les ions d'oxygène et de manière négligeable par les électrons, sonde caractérisée en ce que :

a) l'électrolyte solide est en forme de petit tube dont une extrémité est fermée par une demi-sphère et reçoit la matière de comparaison,

b) l'électrode de sortie (5) est munie à son extrémité dépassant du petit tube (1), au moins d'une partie de sphère de rayon au plus égal à celui de la surface d'extrémité, intérieure (3) du petit tube (1) et s'applique contre sur cette surface d'extrémité intérieure (3) du petit tube (1),

c) le mélange de la matière de comparaison est fritté dans une enceinte fermée à l'air à une température comprise entre 1 390 et 1 450°C et est broyé à une granulométrie de l'ordre de 100 à 200 microns.

2. Sonde à immersion à électrolyte solide selon la revendication 1, caractérisée en ce que l'électrode de sortie (5) est formée d'un fil (5) passant dans un tube capillaire (4), réfractaire, fil dont l'extrémité porte une petite bille (6) réalisée par fusion et qui s'applique contre le bord du petit tube capillaire (4) par son extrémité tournée vers le fil (5).

3. Sonde à immersion à électrolyte solide selon la revendication 2, caractérisée en ce que le diamètre de la petite bille (6) est comprise entre 0,3 à 0,6 mm.

4. Sonde à immersion à électrolyte solide selon l'une des revendications 1 à 3, caractérisée en ce que la matière de comparaison (8) contient de 4 à 10 % en poids de $Fe_2O_3$.

5. Sonde à immersion à électrolyte solide selon la revendication 4, caractérisée en ce que la matière de comparaison (8) contient environ 6 % en poids de $Fe_2O_3$.

6. Sonde à immersion à électrolyte solide selon l'une des revendications 1 à 5, caractérisée en ce que la matière de comparaison (8) contient entre 80 et 92 % en poids de Cr ainsi que de 12 à 5 % en poids de $Cr_2O_3$ et le reste est du $Fe_2O_3$.